# EUROPEAN PATENT SPECIFICATION

(11) **EP 1 453 190 B1**
(45) Date of publication and mention of the grant of the patent: **28.03.2007**
(21) Application number: 04003304.5
(22) Date of filing: 13.02.2004
(51) Int. Cl.: H02K 19/36, H02K 11/04, B23K 11/00

(54) **Connection between a rectifier and a voltage regulator in a vehicle alternator**
Verbindung zwischen einem Gleichrichter und einem Spannungsregler in einer Lichtmaschine
Connexion entre un redresseur et un régulateur de tension dans un alternateur de vehicule

(30) Priority: 28.02.2003 JP 2003053686
(43) Date of publication of application: 01.09.2004
(73) Proprietor: DENSO CORPORATION, Kariya-city, Aichi-pref. 448-8661 (JP)
(72) Inventor: Kumagai, Satoshi, Kariya-city Aichi-pref. 448-8661 (JP)
(74) Representative: Kuhnen & Wacker

(56) References cited:
- EP-B- 0 329 722
- WO-A-02/069396
- FR-A- 2 566 971
- US-A- 6 064 026
- US-A1- 2001 010 436

## Description

### BACKGROUND OF THE INVENTION

### 1. Field of the Invention

The present invention relates to an alternator for use in an automotive vehicle.

### 2. Description of Related Art

An alternator having a phase terminal sandwiched by a detector terminal led out from a voltage regulator is shown in JP-A-11-164518. The phase terminal extending from a terminal base of a rectifier is electrically connected to the detector terminal by resistance welding. If the detector terminal is made of a material having a relatively high electrical resistance, such as a nickel-plated iron plate, the phase terminal sandwiched by the detector terminal can be welded to the detector terminal without difficulty. This is because most of the welding current flows through the phase terminal sandwiched by the detector terminal without bypassing a welding portion.

However, if the detector terminal is made of a material having a high electrical conductivity such as a tin-plated brass, an amount of current flowing through the bent portion of the detector terminal will increase, and thereby an amount of welding current flowing through the phase terminal will decrease. Therefore, there occurs a problem that the phase terminal cannot be well connected to the detector terminal by resistance welding.

FR-A-2566971 discloses a device that serves the purpose of securing an electrical connection of a voltage regulator with a rectifier of an automotive vehicle and is characterised in that it consists of an electrically isolating element of support which is provided with a connection clip and is directly fixed to the rectifier by means of an elastic bracing.

US-A-6064026 discloses a method for producing an electrical bond between a contact element of an electrical connector and a conductor, the contact element having a portion that is bifurcated such that the conductor is positioned between the furcations, the method comprising the steps of (a) providing a system comprising a power source and a weld head, the weld head having a first input and a second input for connection to a first polarity output and a second polarity output, respectively, of the power source, the system further including first and second electrodes movably attached to the weld head and electrically connected to the first and second inputs, respectively, (b) positioning the electrodes on the weld head to create a space between the electrodes that is sized for perceiving both furcations of each contact element, (c) moving the weld head toward the furcations to effect contact between the first electrode and one of the furcations and between the second electrode and the other furcation, the contact being made at a predetermined force that causes the furcations to bent toward each other, and (d) allowing a current of a predetermined magnitude to flow through the first input, the first electrodes, the furcation in contact with the first electrode, the conductor, the furcation in contact with the second electrode, the second electrode and the second input.

US 2001/010436 discloses an improved alternator system for replacing an OEM Ford IAR alternator system. The improved alternator system includes a rectifier with increased heat dissipation qualities and decreased heat generation qualities and configured to maintain secure electrical connections. The alternator system is further configured to provide optimum electrical output by providing the rotor and the stator with additional turns or windings of heavier gauge wire whereby the alternator is capable of inducing a stabilized output current of at least 52 amperes of current at about 1600 revolutions per minute of the rotor.

### SUMMARY OF THE INVENTION

The present invention has been made in view of the above-mentioned problem, and an object of the present invention is to provide an improved structure of the detector terminal with which the phase terminal is sandwiched. By employing the improved structure in the alternator, the phase terminal can be well connected to the detector terminal, not depending on a material of the detector terminal.

The automotive alternator includes an armature having multi-phase windings and a rotor for providing a magnetic field for the armature. Alternating current generated in the armature is rectified into direct current by a rectifier, and output voltage of the armature is controlled to a predetermined level by a voltage regulator. The rectifier and the regulator are mounted on the alternator.

A phase terminal for taking out a phase voltage from one of the phase windings extends from the rectifier, while a detector terminal to be connected to the phase terminal extends from the voltage regulator. The detector terminal is bent in a U-shape, thereby forming a first portion, a second portion positioned in parallel to the first portion and a U-shaped portion positioned between the first and the second portions. The phase terminal is sandwiched between the first and the second portions and welded thereto by resistance welding.

In order to suppress bypassing current flowing through the U-shaped portion in the resistance welding process, a slit window is formed in the U-shaped portion. Since the electrical resistance in the U-shaped portion is increased by the slit window, the bypassing current is suppressed and a sufficient amount of welding current flows through the phase terminal. Accordingly, the phase terminal is surely connected to the detector terminal by the resistance welding without depending on a material, i.e., electrical resistance, forming the detector terminal.

The position of the slit window is not limited to the U-shaped portion, but the slit window may be positioned at other places as long as the slit window suppresses the bypassing current in the resistance welding process. The detector terminal may be made by laminating two or more thin plates. Other objects and features of the present invention will become more readily apparent from a better understanding of the preferred embodiment described below with reference to the following drawings.

### BRIEF DESCRIPTION OF THE DRAWINGS

FIG. 1 is a cross-sectional view showing an alternator for use in an automotive vehicle;
FIG. 2 is a plan view showing a rectifier with a voltage regulator and a brush device mounted thereon, viewed from an axial rear end of the alternator with a rear cover removed;
FIG. 3 is a perspective view showing a detector terminal to which a phase terminal is connected;
FIG. 4 is a plan view showing the detector terminal and the phase terminal connected to the detector terminal, viewed from the axial rear end of the alternator;
FIG. 5 is a side view showing the detector terminal and the phase terminal, a slit window being formed in a U-shaped portion;
FIG. 6 is a side view showing the detector terminal and the phase terminal, a slit window being formed in a second portion of the detector terminal; and
FIG. 7 is a side view showing the detector terminal and the phase terminal, a slit window being formed in a first portion of the detector terminal.

### DETAILED DESCRIPTION OF THE PREFERRED EMBODIMENT

A preferred embodiment of the present invention will be described with reference to accompanying drawings. An alternator 1 for use in an automotive vehicle is composed of: an armature 2, a rotor 3, a front frame 41, a rear frame 42, a rectifier 5, a brush device 6, a voltage regulator 7, and other associated components. The armature 2 is fixed between the front frame 41 and rear frame 42, and the rotor 3 is rotatably supported by the two frames 41, 42. The rear axial end of the alternator 1 is covered with a rear cover 8.

Excitation current is supplied to a field coil wound on the rotor 3 from the brush device 6 through slip rings connected to a rotor shaft. Alternating current generated in the armature 2 is rectified into direct current by the rectifier 5, and output voltage generated in the alternator 1 is controlled to a predetermined level by the voltage regulator 7.

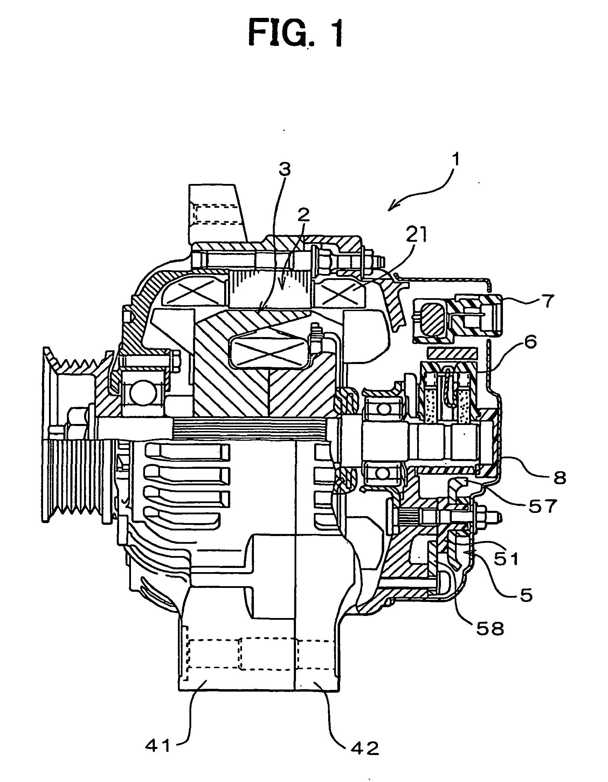

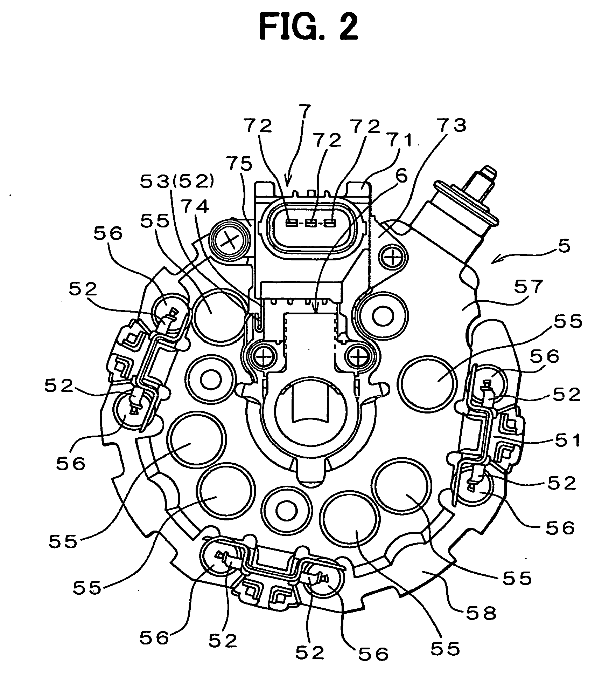

Referring to FIG. 2 showing the rectifier 5 and brush device 6 and the voltage regulator 7 mounted on the rectifier, a structure of a detector terminal 74 extending from the regulator 7 and a phase terminal 53 led out from the rectifier 5 will be described. The rectifier 5 is composed of a plus terminal heatsink plate 57, a minus terminal heatsink plate 58, and a terminal base 51 interposed between two heatsink plates 57, 58. Both heatsink plates 57, 58 and the terminal base 51 is laminated in the axial direction as better seen in FIG. 1.

Six holes are formed on the plus heatsink plate 57, and plus rectifier elements 55 are fixed to respective holes. Similarly, six holes are formed on the minus heatsink plate 58, and minus rectifier elements 56 are fixed to respective holes. The terminal base 51 includes plural connecting terminals 52 molded together by insert-molding. A phase terminal 53 for leading a phase voltage from a three-phase winding of the armature 2 is included in the connecting terminals 52.

The voltage regulator 7 includes a connector case 71. The connector case 71 is fixed to the plus terminal heatsink plate 57 with screws via a mounting arm 73. A terminal arm 75 is fixed to the rear frame 42 with a screw together with the minus heatsink plate 58. The connector case 71 has connector terminals 72 for communicating with an electronic control unit of the vehicle and a detector terminal 74 led out from the connector case 71. Those terminals 72, 74 are molded together with the connector case 71 by insert-molding. The detector terminal 74 is electrically connected to the phase terminal 53 by resistance welding. Frequencies of the phase voltage appearing at the phase terminal 53 and the phase voltage itself are led to the voltage regulator 7 through the detector terminal 74. The voltage regulator 7 controls an amount of current supplied to the field coil of the rotor 3 based on the signals fed from the detector terminal 74. Information including rotational speed of the rotor 3 and a level of the generated voltage in the alternator 1 is sent out to the electronic control unit from the connector terminals 72.

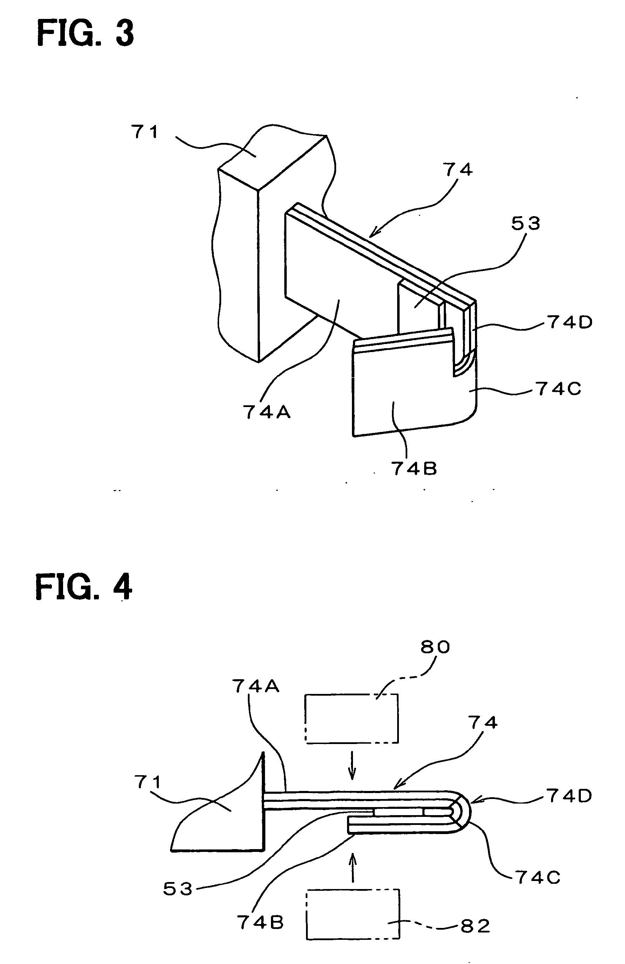

The structure for electrically connecting the phase terminal 53 to the detector terminal 74 will be described in detail with reference to FIGS. 3-5. As shown in FIG. 3, the detector terminal 74 extending from the connector case 71 is formed by bending laminated two plates into a U-shape. Thus, the detector terminal 74 is composed of a first portion 74A, a second portion 74B and a U-shaped portion 74C. A slit window 74D is formed in the U-shaped portion. As shown in FIG. 4, the phase terminal 53 is sandwiched between the first portion 74A and the second portion 74B. A pair of welding electrodes 80, 82 are attached to both sides of the detector terminal 74, and the phase terminal 53 is electrically connected to the detector terminal 74 by resistance welding.

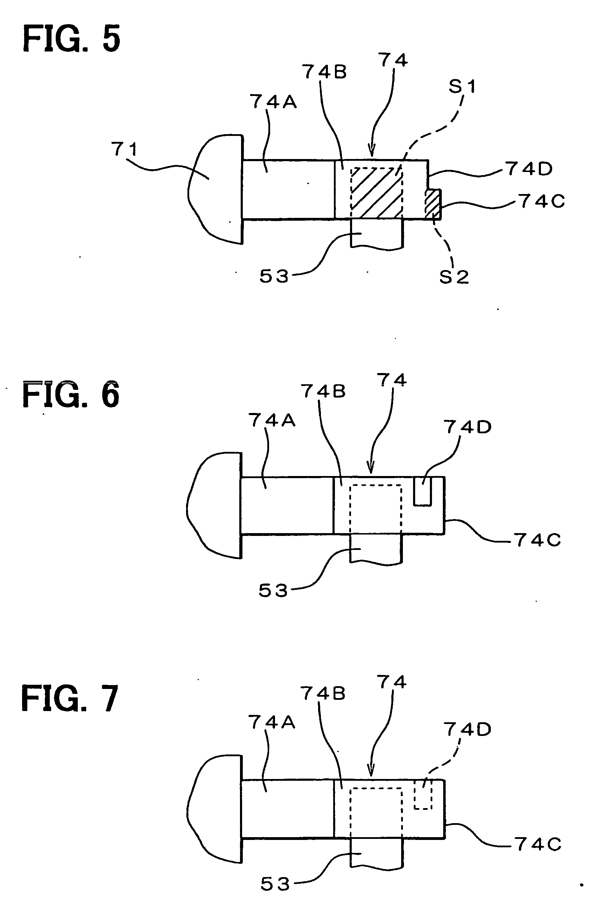

As shown in FIG. 5, a cross-sectional area S2 of the U-shaped portion 74C is made much smaller than an area S1 where the phase terminal 53 contacts the detector terminal 74. The cross-sectional area S2 is made smaller by making the slit window 74D. The welding current flowing through the first portion 74A, the phase terminal 53 and the second portion 74B can be made sufficiently large by suppressing current flowing through the U-shaped portion, i.e., the cross-sectional area S2. Thus, the phase terminal 53 is well welded to the detector terminal 74.

In this particular embodiment, the detector terminal 74 is made by laminating two tin-plated brass plates which have a lower electrical resistance than nickel-plated ferrous material. Forming the detector terminal 74 by laminating thin plates, the slit window 74D can be easily made by stamping. The thin plate may be made common to other terminal plates used in the voltage regulator 7 or the rectifier 5, and thus, the manufacturing costs can be reduced.

Since the bypassing current flowing through the U-shaped portion 74C in the resistance welding process is suppressed by forming the slit window 74D, the resistance welding can be successfully performed even when the detector terminal 74 is made of a material having a low electrical resistance. If the tin-plated brass plate is used as in the present embodiment and if no slit window 74D is formed as in the conventional device, the bypass current flowing through the U-shaped portion will become too large. Therefore, it will be difficult to successfully weld the phase terminal 53 to the detector terminal 74 by resistance welding. By making the slit window 74D in the U-shaped portion 74C, the resistance welding can be successfully performed irrespective of the material forming the detector terminal 74. In addition, by making the slit window 74D in the U-shaped portion 74C, the process of bending, i.e., the process of forming the U-shaped portion, can be easily carried out.

The present invention is not limited to the foregoing embodiment, but it may be variously modified. For example, the slit window 74D may be formed on the second portion 74B of the detector terminal 74, as shown in FIG. 6. Alternatively, the slit window 74D may be formed on the first portion 74A of the detector terminal 74, as shown in FIG. 7. The positions of the slit window 74D are not limited to the examples shown above, it may be made at other places as long as it suppresses the bypassing current at the resistance welding. Further, the number of the slit windows 74D is not limited to one, but more than two slit windows may be formed. For example, one slit window may be made on each of the first portion 74A and the second portion 74B.

While the present invention has been shown and described with reference to the foregoing preferred embodiment, it will be apparent to those skilled in the art that changes in form and detail may be made therein without departing from the scope of the invention as defined in the appended claims.

## Claims

1. An alternator (1) for use in an automotive vehicle, the alternator comprising:
an armature (2) having multi-phase windings (21) generating alternating current therein;
a rectifier (5) having a plurality of rectifier elements (55, 56) for rectifying the alternating current into direct current and a phase terminal (53) connected to one of the multi-phase windings (21), the phase terminal (53) extending from the rectifier (5); and
a voltage regulator (7) for controlling voltage generated in the armature (2), the voltage regulator (7) including a detector terminal (74) connected to the phase terminal (53), **characterized in that**:
the detector terminal (74) is bent in a U-shape thereby forming a first portion (74A) extending from the voltage regulator (7), a second portion (74B) positioned in parallel to the first portion (74A), and a U-shaped portion (74C) positioned between the first (74A) and the second (74B) portions;
the phase terminal (53) is sandwiched between the first (74A) and the second (74B) portions of the detector terminal (74) and is welded to the detector terminal (74) by resistance welding;
a slit window (74D) is formed in the detector terminal (74), so that an amount of current, bypassing the phase terminal (53), flowing through the first portion (74A), the U-shaped portion (74C) and the second portion (74B) in a process of the resistance welding is suppressed by the slit window (74D); and
a contacting area (S1) of the phase terminal (53) to the detector terminal (74) is larger than a cross-sectional area (S2) of the detector terminal (74) at a position where the slit window (74D) is located.

2. The alternator as in claim 1, wherein:
the slit window (74D) is formed in the U-shaped portion (74C) of the detector terminal.

3. The alternator as in claim 1, wherein:
the slit window (74D) is formed in the first portion (74A) of the detector terminal.

4. The alternator as in claim 1, wherein:
the slit window (74D) is formed in the second portion (74B) of the detector terminal.

5. The alternator as in any one of claims 1-4, wherein:
the detector terminal (74) is formed by laminating a plurality of plates.

6. The alternator as in any one of claims 1-5, wherein:
the detector terminal (74) is made of a material having an electrical resistance lower than that of a ferrous material.

## Patentansprüche

1. Alternator (1) zur Verwendung in einem Fahrzeug, wobei der Alternator folgende Merkmale aufweist:
einen Anker (2) mit Mehrphasenwicklungen (21), die darin einen Wechselstrom erzeugen;
einen Gleichrichter (5) mit einer Mehrzahl von Gleichrichterelementen (55, 56) zum Gleichrichten des Wechselstroms in einen Gleichstrom und einer Phasenklemme (53), der mit den Mehrphasenwicklungen (21) verbunden ist, wobei sich der Phasenklemme (53) von dem Gleichrichter (5) erstreckt;
und einen Spannungsregler (7) zum Steuern einer Spannung in dem Anker (2), wobei der Spannungsregler (7) eine Detektorklemme (74) beinhaltet, der mit der Phasenklemme (53) verbunden ist, **dadurch gekennzeichnet, dass**:
die Detektorklemme (74) in einer U-Form gebogen ist, wodurch ein erster Abschnitt (74A), der sich von dem Spannungsregler (7) erstreckt, ein zweiter Abschnitt (74B), der parallel zu dem ersten Abschnitt (74A) positioniert ist, und ein U-förmiger Abschnitt (74C), der zwischen den ersten (74A) und den zweiten (74B) Abschnitten positioniert ist, gebildet wird;
die Phasenklemme (53) zwischen den ersten (74A) und den zweiten (74B) Abschnitten der Detektorklemme (74) sandwichartig angeordnet ist und mit der Detektorklemme (74) durch Widerstandsschweißen verschweißt ist;
ein Schlitzfenster (74D) in der Detektorklemme (74) ausgebildet ist, so dass eine Menge eines Stroms, die die Phasenklemme (53) umgeht, durch den ersten Abschnitt (74A), den U-förmigen Abschnitt (74C) und den zweiten Abschnitt (74B) in einem Vorgang des Widerstandschweißens fließt, durch das Schlitzfenster (74D) unterdrückt wird; und
ein Kontaktbereich (S1) der Phasenklemme (53) zu der Detektorklemme (74) größer ist als eine Querschnittsfläche (S2) der Detektorklemme (74) an einer Position, wo das Schlitzfenster (74D) positioniert ist.

2. Alternator nach Anspruch 1, wobei:
das Schlitzfenster (74D) in dem U-förmigen Abschnitt (74C) der Detektorklemme ausgebildet ist.

3. Alternator nach Anspruch 1, wobei:
das Schlitzfenster (74D) in dem ersten Abschnitt (74A) der Detektorklemme ausgebildet ist.

4. Alternator nach Anspruch 1, wobei:
das Schlitzfenster (74D) in dem zweiten Abschnitt (74B) der Detektorklemme ausgebildet ist.

5. Alternator nach einem der Ansprüche 1 bis 4, wobei:
die Detektorklemme (74) durch Laminieren einer Mehrzahl von Platten ausgebildet ist.

6. Alternator nach einem der Ansprüche 1 bis 5, wobei:
die Detektorklemme (74) aus einem Material mit einem elektrischen Widerstand gefertigt ist, der geringer ist als der von eisenhaltigem Material.

## Revendications

1. Alternateur (1) destiné à être utilisé dans un véhicule automobile, l'alternateur comprenant :
une armature (2) ayant des enroulements multiphasés (21) générant du courant alternatif dans celle-ci ;
un redresseur (5) ayant une pluralité d'éléments de redresseur (55, 56) pour redresser le courant alternatif en courant continu et une borne de phase (53) connectée à un des enroulements multiphasés (21), la borne de phase (53) s'étendant à partir du redresseur (5) ; et
un régulateur de tension (7) pour contrôler la tension générée dans l'armature (2), le régulateur de tension (7) comprenant une borne de détecteur (74) connectée à la borne de phase (53), **caractérisé en ce que** :
la borne de détecteur (74) est courbée en forme de U pour former ainsi une première partie (74A) s'étendant à partir du régulateur de tension (7), une deuxième partie (74B) placée parallèle à la première partie (74A), et une partie en forme de U (74C) placée entre la première (74A) et la deuxième (74B) parties ;
la borne de phase (53) est entourée par la première (74A) et la deuxième (74B) parties de la borne de détecteur (74) et est soudée à la borne de détecteur (74) par soudure résistive ;
une fenêtre à fentes (74D) est formée dans la borne de détecteur (74), de sorte qu'une quantité de courant, évitant la borne de phase (53), circulant à travers la première partie (74A), la partie en forme de U (74C) et la deuxième partie (74B) dans un processus de soudure résistive soit supprimée par la fenêtre à fentes (74D) ; et
une aire de contact (S1) de la borne de phase (53) avec la borne de détecteur (74) est plus grande qu'une aire de section transversale (S2) de la borne de détecteur (74) à une position où se trouve la fenêtre à fentes (74D).

2. Alternateur selon la revendication 1, dans lequel :
la fenêtre à fentes (74D) est formée dans la partie en forme de U (74C) de la borne de détecteur.

3. Alternateur selon la revendication 1, dans lequel :
la fenêtre à fentes (74D) est formée dans la première partie (74A) de la borne de détecteur.

4. Alternateur selon la revendication 1, dans lequel:
la fenêtre à fentes (74D) est formée dans la deuxième partie (74B) de la borne de détecteur.

5. Alternateur selon l'une quelconque des revendications 1 à 4, dans lequel:
la borne de détecteur (74) est formée en laminant une pluralité de plaques.

6. Alternateur selon l'une quelconque des revendications 1 à 5, dans lequel :
la borne de détecteur (74) est faite d'un matériau ayant une résistance électrique inférieure à celle d'un matériau ferreux.
